# EUROPEAN PATENT SPECIFICATION

(11) **EP 2 801 472 B1**
(45) Date of publication and mention of the grant of the patent: **09.11.2016**
(21) Application number: 14167453.1
(22) Date of filing: 07.05.2014
(51) Int. Cl.: B29C 65/36, B29K 105/06, B29K 307/04, B29K 507/04

(54) **Induction machine for bonding polymer-matrix conductive composite materials and bonding method for said machine**
Induktionsvorrichtung zur Verbindung von stromleitenden Verbundwerkstoffen mit einer polymerischen Matrix und Verbindungsmethode mit dieser Vorrichtung
Machine d'induction pour lier des matériaux composites conducteurs à matrice polymère et méthode d'assemblage avec cette machine

(30) Priority: 07.05.2013 IT TO20130367
(43) Date of publication of application: 12.11.2014
(73) Proprietor: Centro di Progettazione Design & Tecnologie dei Materiali, Brindisi (IT)
(72) Inventor: Pappadà, Silvio, 72100 Brindisi (IT); Salomi, Andrea, 72100 Brindisi (IT)
(74) Representative: Mola, Edoardo

(56) References cited:
- WO-A1-2013/110270
- WO-A2-2009/047010
- US-A- 5 240 542

## Description

The present invention relates to an induction machine for bonding elements of electrically conductive polymer-matrix composite materials.

The key factor for increasing the use of polymer-matrix composite materials in numerous sectors of high added-value, such as aerospace or transport, is often tied to the possibility of improving, the level of bonding process automation, the mechanical resistance of the joint and the quality of the surface finishing of the bonded elements, either individually or in combination. Preferably, in the aerospace or transport sectors for example, it is necessary to maximize the performance indicators for the various areas mentioned above. In particular, some quality controls contemplate optical examination of the bonded product and, in the case of surface imperfections, in-depth analysis is envisaged, which at best generates costs related to the checking procedure and in the worst cases further increases costs because the defective piece is rejected.

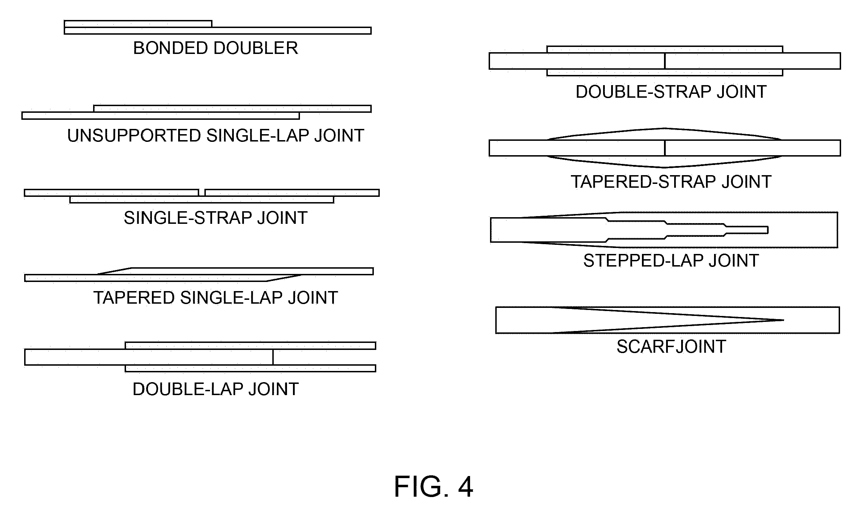

The induction welding process is a bonding process that does not necessarily contemplate the use of filler material and in the simplest case is performed by overlapping two edges of a first and a second piece to be welded (also called adherends) kept in contact with each other. In an induction welding process, the (thermoplastic or heat-sensitive) matrix of one or both of the adherends is brought to a softening or melting temperature to induce a bond of a chemical and/or mechanical nature between the two adherends and successively cooled to make the adhesion permanent. Examples of joints that are typically created, which includes shaping, are shown in Figure 4.

In this technology, the variable electromagnetic field generated by an inductor causes the induction of parasite currents in the conductive composite material, which, due to the Joule effect, heat the matrix up to the melting or softening conditions. Then, once the adherends are brought to the temperature considered to be ideal, mechanical pressure can be applied, known as consolidation pressure, for inducing the adhesion of the adherends. The action of a compactor system is of fundamental importance for the creation of the welded joint. As a consequence, the action of the inductor is normally associated with the action of the compactor system.

The way of creating the joint can be static or dynamic, depending on whether the coil and/or compaction system can assume different positions in time with respect to the material to be welded.

The compaction system normally consists of a metal piston that can have different shapes according to the operating procedure and/or geometry of the piece. Typical compactor piston shapes are those of a plate, a spherical or cylindrical roller, etc. The compactor piston can include an internal cooling circuit. This piston thus has the twofold function of applying the consolidation pressure and cooling the material.

In traditional induction welding systems, bearing in mind a dependency on the square of the distance from the coil, the heating action due to parasite currents tends to be concentrated on the surface directly exposed to the inductor. A very high temperature gradient is consequently generated, which induces the melting of the surface matrix rather that in the adhesion zone of the adherends: this has a negative impact on welding quality and the mechanical characteristics of the joint thus obtained. Furthermore, the direction of this temperature gradient, through the thickness, results in maximum temperature on the surface facing the coil and minimum temperature on the joint surface. Therefore, to reach the ideal temperature on the surface of the adherends, the temperature on the outermost zones will be excessive and this can cause degradation of the matrix of the composite material. The presence of this gradient thus significantly limits the possible thickness of the adherends. Similarly, there is a high concentration of current on the edges of the pieces to be welded, with temperature gradients being consequently created thereupon that are often unacceptable and which, once again, can lead to degradation of the material. To avoid this drawback, it is possible to perform the welding away from the edges of the piece of composite material, but, due to the incomplete welding of the joint, this entails a drop in mechanical resistance of the finished product and/or the creation of zones where the initiation of cracks is facilitated. Alternatively, it is possible to use of a metal susceptor, for example a net as disclosed in WO-A1-2009047010, on the welding interface to concentrate the action of the eddy currents in the area of interest. However, in this case, the welding area comprises an extraneous body and this has a negative effect on the mechanical resistance of the welded joint. In particular WO-A1-2009047010 discloses a cooling device that is powered after the inductor is de-energized. Another problem regarding traditional welding systems lies in the fact that due to the non-optimized temperature gradient, the compaction piston must be held very close to the inductor: in fact, it is necessary to apply the consolidation pressure before the temperature of the matrix in the joint zone drops below the melting temperature. The closeness of the metal cylinder to the induction coil causes perturbation of the electromagnetic field that is difficult to control, with consequent loss of induction heating effectiveness within the composite material and the need to carry out numerous preliminary tests before achieving a good quality weld. The preliminary tests can be carried out by means of computational tools, including finite element calculations, and/or laboratory tests.

Furthermore, in traditional systems in which the melting of the matrix of the surface exposed to the induction coil is up to the interface to be welded (unless susceptors are used), it is possible that the compaction piston leaves an imprint on the surface of the joint exposed directly to the induction coil, with consequent negative effects in the case where quality checks contemplate optical examination of the welded zone.

For the above listed reasons, traditional induction welding methods have control requirements that render the level of production line automation quite low.

The object of the present invention is to provide an induction machine for bonding, consolidating and/or repairing polymer-matrix composite materials that is devoid of the above-indicated drawbacks and permits a high level of production line automation.

The object of the present invention is achieved by means of an induction bonding machine according to claim 1 and by means of an induction bonding method according to claim 11.

The invention will now be described with reference to the attached drawings, which illustrate non-limitative embodiments, and refer to:
- Figure 1: a perspective view of an induction bonding machine according to the present invention: for simplicity, the layout of a machine moveable along Cartesian axes is shown;
- Figures 2 and 3: comparative graphs of temperature readings taken on a piece bonded respectively with and without the welding machine according to the present invention;
- Figure 4: examples of welding that can be carried out by means of an induction machine on pieces of conductive polymer-matrix composite materials;

- Figure 5: shows a comparison between the temperature distribution achievable according to the present invention (left) and according to state of the art teaching; and
- Figure 6: shows an enlarged perspective view of a constructional detail of the invention.

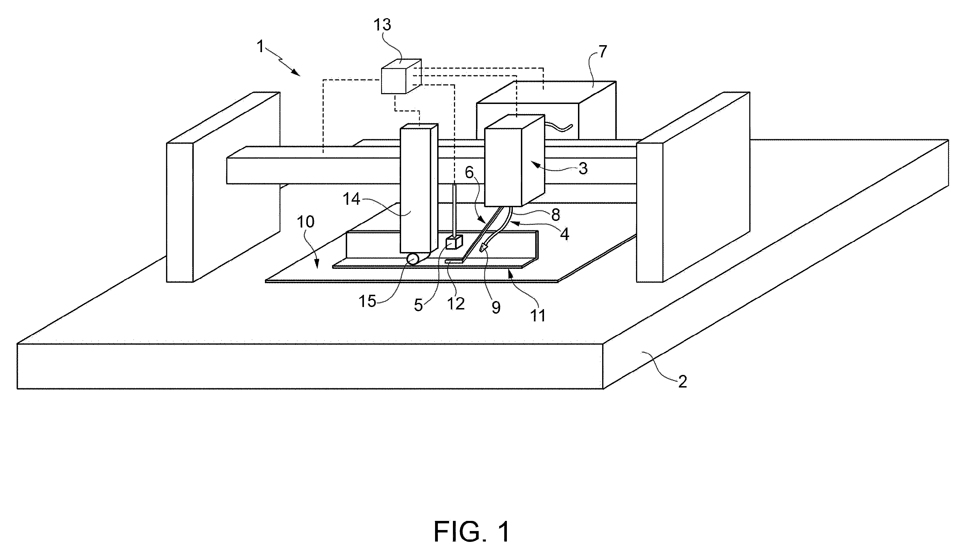

Figure 1 shows an induction welding machine, indicated as whole by reference numeral 1, comprising a base 2 and a welding head 3 moveable along three Cartesian axes with respect to the base 2 in a known manner and a powered unit (not shown in greater detail) for moving the welding head 3. In the most complex case, the welding head can be mounted on a robot arm. In particular, the welding head 3 has three to six degrees of freedom.

The welding machine 1 also comprises a gas flow cooling device 4 and a temperature sensor 5, which are preferably mounted on board the welding head 3.

According to the present invention, the gas flow cooling device 4 is controlled on the basis of a signal received from the temperature sensor 5 to send a flow of gas onto an area of a first piece to be welded that, in use, is heated by an inductor 6 of the welding head 3. The inductor 6 is of known type and has an end portion formed, for example, by a single, twin, helical or double-T coil. The flow rate and/or speed and/or temperature of the gas flow of the cooling device 4 can be controlled on the basis of the signal from the temperature sensor 5. Preferably, the flow rate can be controlled through the automatic or manual regulation of a generator (or external source) 7 of a flow of gas or other fluid (any type of compressor, fan, any type of pump, or any type of line). The temperature of the gas flow can be controlled by a heating or cooling element placed upstream of the discharge point and a temperature sensor positioned in the gas flow at the discharge point will serve to provide input data for controlling the temperature. The gas flow cooling device 4 comprises a duct 8 connected to the gas flow generator 7 that has one or more end nozzles 9 having an adjustable position with respect to the welding head 3, so as to direct the gas flow in the most appropriate direction according to the welding steps and/or the shape of the weld and/or the geometry of the product to be welded and/or the size and shape of the coil of the inductor 6. During welding, the end nozzle 9 can be substantially fixed with respect to the inductor 6 or fixed with respect to the base 2. Preferably, the duct 8 is carried on the welding head 3.

The temperature sensor 5 detects a temperature indicative of the heating of a surface 10 of the first piece to be welded P1 facing a portion of the inductor 6 corresponding to a point chosen as the reference point on the laminate and opposite to a surface 11 of the first piece to be welded P1 on which welding to a second piece to be welded P2 starts. The temperature sensor 5 can be a pyrometer close to the head or coil 12 of the inductor 6 so as to detect a precise temperature indicative of that of surface 10 or an infrared thermal camera to detect the temperature of surface 10 in two or three dimensions. It is possible to use other temperature sensors instead of those cited to detect the heating of surface 10 during the energizing of the inductor 6. The sensor 5 can also be movable and adjustable with respect to the inductor 6. During welding, the sensor 5 can be substantially fixed with respect to the inductor 6 or fixed with respect to the base 2. Preferably, the sensor 5 is carried on the welding head 3.

The temperature sensor 5, the gas flow cooling device 4 and the actuated system for moving the welding head 3 are connected to a control unit 13 for data signal exchange. In particular, the control unit 13 implements a closed-loop control to keep the temperature detected by the temperature sensor 5 at a predetermined level by controlling the gas flow cooling device 4. Preferably, the control unit 13 controls the gas flow cooling device 4 so as to dissipate the heat acting on surface 10, by convection for example, so that the effective temperature on the surface 11 is below the melting or softening temperature of the matrix of the composite material. In this way, even after the welding had been carried out, the original finishing of the surface 10 of the first piece to be welded, or rather the finishing of surface 10 prior to performing the welding, is preserved.

Furthermore, through the heat dissipation on surface 10 provided by the gas flow cooling device 4, the melting temperature on surface 11 can be reached while keeping the temperature of surface 10 relatively low. Consequently, the temperature gradient along the thickness of the first piece to be welded can be controlled in a precise manner, with consequent advantages for the final quality of the welded joint, as previously described. Optionally, if necessary, the temperature gradient of the lower adherend can also be controlled by using fluid/resistance based cooling/heating aids.

Temperature gradient control is a particularly important aspect when the thickness between surfaces 10 and 11 increases. In fact, a large amount of energy is necessary to adequately heat surface 11, which results in a rapid local increase in the temperature on surface 10 to levels even higher than those of the melting or softening temperature. By controlling the gas flow cooling device 4, the temperature of surface 10 can be kept at non-excessive levels while still enabling the melting of surface 11 and correct execution of the welded joint.

Furthermore, the convective action of the gas flow also considerably reduces the negative effect of eddy current concentration and consequently the temperature peaks that occur on the end edges of the elements to be welded as well. In this way, it is possible to make a high-quality weld, even close to the end edges of the first and/or the second pieces to be welded. Preferably, the welding machine 1 also comprises a compactor 14 to press the first piece to be welded onto the second piece to be welded while the inductor 6 is working and welding is being performed. The compactor 14 can comprise a roller 15 that can be oriented to move in contact with surface 10 without significant sliding or a linear piston that presses down and in the meantime remains fixed while the inductor 6 is working to perform the weld. The compactor 14 can comprise a handling device so that the compactor 14 can move along the weld seam during welding in a rigid or independent manner with respect to the welding head 3. It is also possible that the compactor 14 is fixed while the welding head 3 is in movement. The compactor 14 can be mounted on board the welding head. By means of the handling device, the vertical movement of the compactor 14 can be rigid or independent with respect to that of the inductor 6. The handling device of the compactor 14 can be actuated and/or controlled by the control unit 13.

Preferably, the roller 15 or linear piston are of metal and comprise an internal cooling system. To ensure correct solidification after welding, the cooling system of the roller 15 enables dissipating heat after the melting of the matrix due to the action of the inductor 6. Heat dissipation is improved by having a compactor 14 that has a metal element in contact with piece P1. In this way, the surface 11 is cooled rapidly and the compactor 14 is not excessively overheated by the action of the inductor 6. The position of the compactor 14 is adjustable with respect to the inductor 6 and the temperature of the compactor is adjustable via the control unit 13.

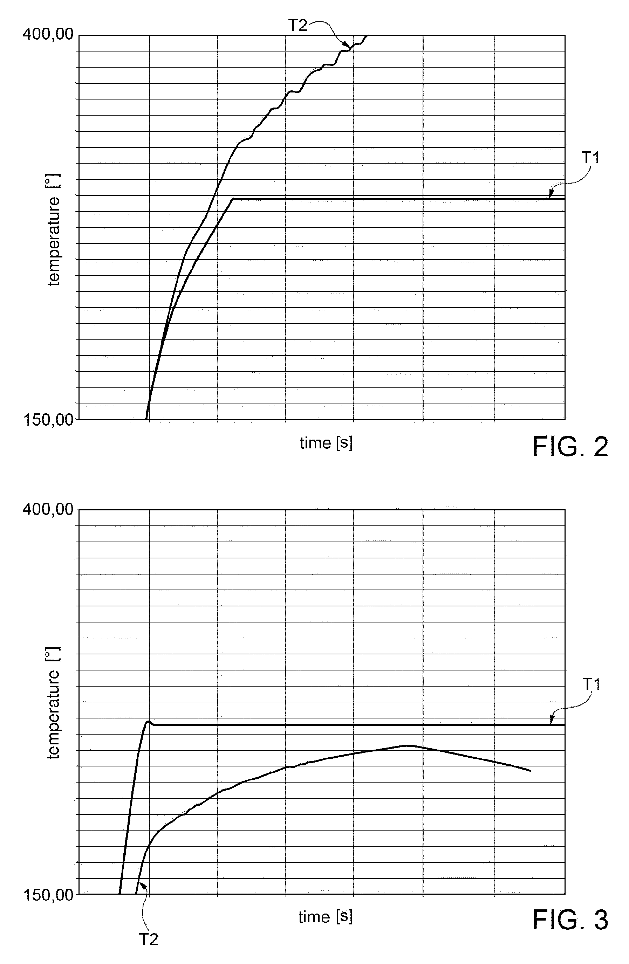

Figures 2 and 3 refer to experimental data taken on a first piece to be welded, with appropriate instrumentation also provided on surface 11. In Figure 3, the temperature T1 of surface 10 is controlled and the gas flow generation device 4 is disabled. It is evident how the temperature T2 on surface 11 remains below the temperature on surface 10. In Figure 2, when the gas flow generation device 4 is working, it is possible to increase the temperature T2 of surface 11 while keeping the temperature T1 of surface 10 constant. In this way, the energy absorbed from the inductor 6 is such as to make surface 10 exceed the melting temperature, but through the gas cooling, the temperature of this surface is controlled to remain approximately equal to or less than the melting temperature, while the energy that reaches surface 11 causes the appropriate heating, for example that of melting, in that zone. Therefore, it is possible to exceed the melting temperature of the matrix on surface 11 without melting the matrix on surface 10. In other words, the temperature of surface 10 can be controlled and kept permanently below that reached on surface 11 through the action of the gas flow generation device 4. The temperature difference between the two surfaces 10 and 11 can exceed 20°. The temperature trends in Figs 2 and 3 were obtained in a joint welding test made on two balanced and symmetrical PPS-Carbon laminas, each 2.48 mm thick (commercial name CETEX® PPS, manufactures and distributed by TENCATE), with a power level of 3 kWh and distance of the coil from the surface of the piece to be welded of 2 mm.

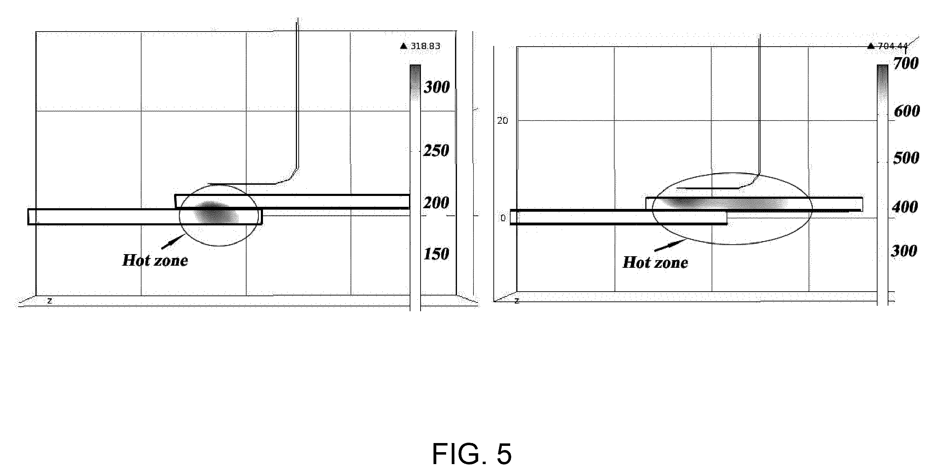

Figure 5 refers to a comparative experimental simulation regarding the welding of a component having a matrix comprising PPS (polyphenylene sulphide - melting temperature 280°) and carbon fibre filler approximately 2.5 mm thick. With power and other welding parameters being equal, it is evident how, after setting the surface temperature to 200°, the surface cooling according to the present invention is effective and enables achieving a temperature peak on the welding interface. Instead, on the right, a simulation according to the known technology is shown, where it is evident how the high temperature zone is very broad and, in particular, such as to soften and/or melt the surface of the piece as well.

The advantages that can be achieved with the induction bonding machine according to the present invention are the following.

With pieces of the same thickness to be welded, it is possible to reliably control the thermal gradient along the thickness.

According to the present invention, it is possible to obtain an optimized and controlled temperature gradient inside the composite material to be heated, which can even be reversed so as to maximize the temperature on the joint surface of the adherends and minimize it on the outer surface. In addition, with the present invention, this gradient could be controlled and modified in real time during the welding. With respect to traditional systems, this invention thus allows having greater uniformity in physical and mechanical properties along the thickness of joint, improving the aesthetic properties and surface evenness of the outer surface adjacent to the joint.

The surface 10 facing the inductor 6 can be kept at a lower temperature than that of melting, significantly reducing the risk of generating surface defects. It is possible to control the effects of overheating on the edges and the critical points of the beginning and end of the joint through the action of an adjustable cooling system.

It is also possible to extend the applicability of induction welding to larger thicknesses with respect to those used up to now. For example, it is possible to easily exceed a thickness of 3 mm for the element that defines surfaces 10 and 11.

Furthermore, since it is possible to heat surface 11 considerably more with respect to surface 10, the time before the temperature of surface 11 drops below the solidification temperature tends to increase. For this reason, the metal compactor 14 can be positioned, on a horizontal plane, at a distance from the inductor 6 of more than 1.5 cm, preferably more than 3.5 cm, so as not to interfere excessively with the magnetic field generated by the inductor and still be able to contribute to the controlled solidification of the weld. In this way, the electromagnetic field generated by the inductor 6 is only marginally perturbed by the metal compactor 14 and the heating of the first piece to be welded is more precisely controllable: the weld has improved mechanical characteristics.

The induction machine 1 is fully automatable and is suitable for setting up continuous welding lines.

By using a welding machine according to the present invention, it was possible to make overlapping welded joints having the maximum resistance properties according to that reported in the literature for joint technologies that contemplate melting the matrix (induction welding, friction welding, ultrasonic welding, etc.) or for bonding methods that contemplate the use of structural adhesives.

With the present invention, it is also possible to bond already vulcanized or cured thermosetting composites by interposing layers of non-vulcanized material between the already vulcanized laminates. In this case, the heating would be concentrated just in the zone where the uncured material is present, leaving the rest of the joint at a temperature below that of curing.

According to the present invention, broad freedom is possible in the choice of the coils, as the optimization of the electromagnetic field is not tied just to the choice of coil geometry, as in traditional machines. In fact, in the new machine it is possible to choose a coil according to the requirements set by the geometry and other physical-mechanical characteristics of the joint to be made, and then optimize the temperature distribution inside the joint with the cooling and control system of the present invention.

When the temperature of element P2 to be bonded is also controlled through conduction or convection with a hot or cold source, the checking of the outer surface of the final piece obtained after bonding is further improved.

The use of a gas or any other aeriform element directed onto surface 10 by one or more nozzles allows keeping surface 10 always visible. In this way, the temperature can be monitored in a straightforward manner.

Finally, it is clear that modifications can be applied to or variants made of the induction welding machine set forth herein without departing from the scope as defined in the appended claims.

The induction machine 1 can be used for welding any composite material with a thermoplastic matrix containing electrically conductive fibres or particles, such as carbon fibres for example. It can also be used to make glued joints with uncured or partially cured thermosetting composite materials: in this case, the curing temperature of the thermosetting material in the joint surfaces must be exceeded using induction heating technology. When the machine 1 is used for bonding thermoplastic matrix composite materials, the compactor 14 is optional.

The cooling device 4 can generate a flow of air or other suitable gases in a manner dependent, for example, on the material to be bonded.

Regulation of the temperature on surface 10 via the control unit 13 can take place through a combination of: control of the temperature and/or gas flow from the nozzle 8 and/or control of the electrical power of the inductor 6 and/or control of the distance of the inductor 6 from surface 10.

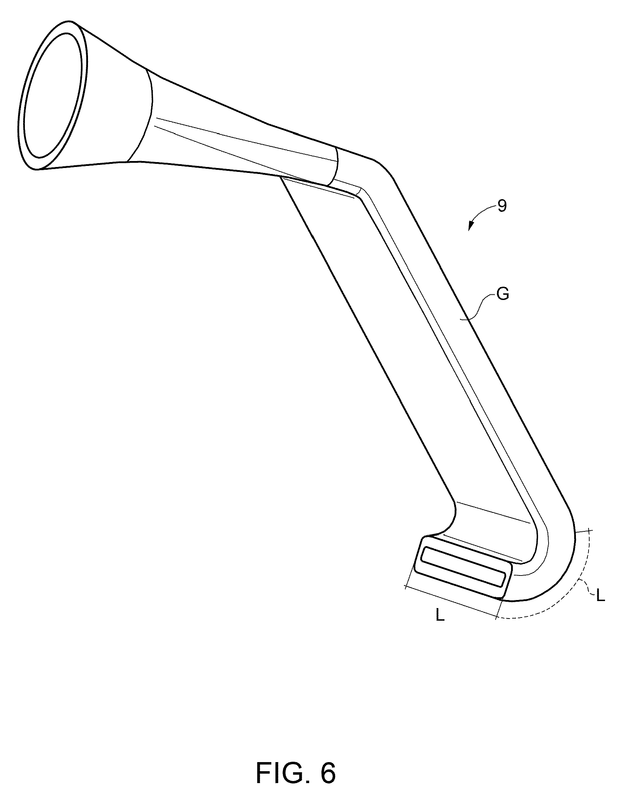

Figure 6 shows a nozzle according to a preferred embodiment of the present invention. In particular, it has been verified that a laminar and/or transitional cooling flow generated by the nozzle 9 is particularly suited for efficiently controlling the temperature monitored on the surface of the joint. This flow can be obtained, in combination with the control of the flow rate of cooling fluid (in the case of a gas, from 1 to 500 l/min), either by the generation of a cooling flow that has a direction substantially parallel to the surface to be welded and/or by a nozzle having an outlet port with an elongated shape factor, for example 10:1 or more and a flow guide G that is straight and/or has sides parallel to each other such that the cross-section of the flow guide is the same as the outlet port of the nozzle and has a length equal to or greater than 'L', where 'L' is the maximum width of the outlet port of the nozzle 9 (Figure 6). According to the example in Figure 6, the shape ratio is 17. The laminar or transitional flow can be identified through fluid dynamics simulations of the welding zone in two or three dimensions. A flow is considered laminar or transitional, i.e. not turbulent, on the basis of tables or graphs indicating the Reynolds number.

## Claims

1. An induction machine for bonding electrically conductive polymer-matrix composite materials comprising a movable coil inductor (6), a temperature sensor (5) configured to detect the temperature of the surface of the composite material during energization of the coil inductor (6) and a control unit (13) to control said coil inductor (6) on the basis of the signal received from said temperature sensor (5), and comprising at least one or more devices (9) for directing a flow of a cooling gas or fluid in surface heat exchange with a heated zone (10) facing said coil inductor (6) of an element to be bonded (P1), **characterized in that** said flow is controlled on the basis of a signal received by the temperature sensor (5).

2. An induction machine according to claim 1, **characterized in that** it comprises a compactor (14) having a metal portion (15) movable to a contact position with a piece to be bonded and having a cooling circuit for cooling said metal portion (15), said metal portion (15) being further arranged at a distance greater than 1.5 cm with respect to said coil inductor (6).

3. A machine according to any one of the preceding claims, **characterized in that** said control unit (13) is programmable to energize said coil inductor (6) with sufficient energy to exceed one of the melting, softening or curing temperatures of the polymer matrix on a surface (10) of said element to be bonded (P1) facing an end portion of said coil inductor (6), said gas flow being such as to keep said surface (10) approximately at said temperature or below it.

4. A machine according to claim 3, **characterized in that** said control unit (13) is programmed to control, on the basis of the signal from said sensor (5), at least one of a vertical position and/or power of said coil inductor (6), and a speed and/or a temperature of said gas or fluid flow.

5. A machine according to any one of the preceding claims, **characterized in that** it comprises a system for moving said coil inductor (6) and said device (9), said control unit (13) controlling the forward movement of said coil inductor (6) and controlling said fluid flow and/or said device (9) for obtaining a continuous bond.

6. A machine according to any one of the preceding claims, **characterized in that** said coil inductor (6) and said device (9) are carried by the same movable machining head (3).

7. A machine according to any one of the preceding claims, **characterized in that** it comprises a support (8) for said device (9) configured to adjust the position of said device (9) with respect to said coil inductor (6).

8. A machine according to any one of the preceding claims, **characterized in that** said device (9) comprises a nozzle.

9. A machine according to any one of the preceding claims, **characterized in that** it comprises a gas or fluid flow generator (7) controlled by said control unit (13).

10. A machine according to any one of the preceding claims, **characterized in that** the device (9) is configured so as to generate a laminar or transitional flow of cooling gas or fluid on the heated zone (10).

11. A bonding method for components of electrically conductive polymer-matrix composite material, **characterized in that** it is applied by means of an induction machine according to any one of the preceding claims.

12. A bonding method according to claim 11, **characterized in that** said cooling flow is applied on a face (10) of said element to be bonded (10) facing said coil inductor (6), and **in that** the temperature is controlled through conduction and/or convection of a further element to be bonded (P2) that is in contact with said element to be bonded (P1).

13. A bonding method according to one of claims 11 or 12, **characterized in that** it comprises the step of generating a laminar or transitional ouput flow from the device (9) of cooling gas or fluid onto the heated zone (10).

## Patentansprüche

1. Induktionsvorrichtung zur Verbindung von elektrisch leitenden Verbundwerkstoffen mit einer Polymermatrix, die einen beweglichen Spuleninduktor (6), einen Temperatursensor (5), der konfiguriert ist, um die Temperatur der Oberfläche des Verbundwerkstoffs während der Energiespeisung des Spuleninduktors (6) zu erfassen, und eine Steuereinheit (13) aufweist, um den Spuleninduktor (6) auf der Basis des von dem Temperatursensor (5) empfangenen Signals zu steuern, und die wenigstens eine oder mehrere Vorrichtungen (9) aufweist, um eine Strömung eines Kühlgases oder eines Fluids in einem Oberflächenwärmeaustausch mit einer geheizten Zone (10) eines Elements (P1), das verbunden werden soll, die dem Spuleninduktor (6) zugewandt ist, zu leiten, **dadurch gekennzeichnet, dass** die Strömung auf der Basis eines von dem Temperatursensor (5) empfangenen Signals gesteuert wird.

2. Induktionsvorrichtung nach Anspruch 1, **dadurch gekennzeichnet, dass** sie einen Kompaktierer (14) mit einem Metallabschnitt (15), der zu einer Kontaktposition mit einem Teil, das verbunden werden soll, beweglich ist und einen Kühlkreis zum Kühlen des Metallabschnitts (15) hat, aufweist, wobei der Metallabschnitt (15) ferner in einem größeren Abstand als 1,5 cm in Bezug auf die Induktorspule (6) angeordnet ist.

3. Vorrichtung nach einem der vorhergehenden Ansprüche, **dadurch gekennzeichnet, dass** die Steuereinheit (13) programmierbar ist, um den Spuleninduktor (6) mit ausreichend Energie zu speisen, um eine der Schmelz-, Erweichungs- oder Härtungstemperaturen der Polymermatrix auf einer Oberfläche (10) des Elements (P1), das verbunden werden soll, das einem Endabschnitt des Spuleninduktors (6) zugewandt ist, zu überschreiten, wobei die Gasströmung derart ist, dass sie die Oberfläche (10) ungefähr auf dieser Temperatur oder darunter hält.

4. Vorrichtung nach Anspruch 3, **dadurch gekennzeichnet, dass** die Steuereinheit (13) programmiert ist, um auf der Basis des Signals von dem Sensor (5) wenigstens eine vertikale Position und/oder eine Leistung des Spuleninduktors (6) und eine Geschwindigkeit und/oder eine Temperatur der Gas- oder Fluidströmung zu steuern.

5. Vorrichtung nach einem der vorhergehenden Ansprüche, **dadurch gekennzeichnet, dass** sie ein System zum Bewegen des Spuleninduktors (6) und der Vorrichtung (9) aufweist, wobei die Steuereinheit (13) die Vorwärtsbewegung der Induktorspule (6) steuert und die Fluidströmung und/oder die Vorrichtung (9) steuert, um eine durchgängige Verbindung zu erhalten.

6. Vorrichtung nach einem der vorhergehenden Ansprüche, **dadurch gekennzeichnet, dass** der Spuleninduktor (6) und die Vorrichtung (9) durch den gleichen beweglichen Maschinenkopf (3) getragen werden.

7. Vorrichtung nach einem der vorhergehenden Ansprüche, **dadurch gekennzeichnet, dass** sie eine Halterung (8) für die Vorrichtung (9) aufweist, die konfiguriert ist, um die Position der Vorrichtung (9) in Bezug auf den Spuleninduktor (6) einzustellen.

8. Vorrichtung nach einem der vorhergehenden Ansprüche, **dadurch gekennzeichnet, dass** die Vorrichtung (9) eine Düse aufweist.

9. Vorrichtung nach einem der vorhergehenden Ansprüche, **dadurch gekennzeichnet, dass** sie einen Gas- oder Fluidströmungsgenerator (7) aufweist, der von der Steuereinheit (13) gesteuert wird.

10. Vorrichtung nach einem der vorhergehenden Ansprüche, **dadurch gekennzeichnet, dass** die Vorrichtung (9) konfiguriert ist, um eine laminare oder Übergangsströmung von Kühlgas oder Fluid auf die geheizte Zone (10) zu erzeugen.

11. Verfahren zur Verbindung von elektrisch leitenden Verbundwerkstoffen mit einer Polymermatrix, **dadurch gekennzeichnet, dass** es mittels einer Induktionsvorrichtung nach einem der vorhergehenden Ansprüche angewendet wird.

12. Verfahren nach Anspruch 11, **dadurch gekennzeichnet, dass** die Kühlströmung auf eine Seite (10) des Elements, das verbunden werden soll, das der Induktorspule (6) zugewandt ist, angewendet wird, und dass die Temperatur durch Leitung und/oder Konvektion eines weiteren Elements (P2), das verbunden werden soll, das in Kontakt mit dem Element (P1), das verbunden werden soll, ist, gesteuert wird.

13. Verfahren nach einem der Ansprüche 11 oder 12, **dadurch gekennzeichnet, dass** es den Schritt des Erzeugens einer laminaren oder Übergangsausgangsströmung von der Vorrichtung (9) aus Kühlgas oder Fluid auf die geheizte Zone (10) aufweist.

## Revendications

1. Machine à induction destinée à lier des matériaux composites électroconducteurs à matrice polymère, comprenant une bobine d'inductance mobile (6), un capteur de température (5) conçu pour détecter la température de la surface du matériau composite au cours de la mise sous tension de la bobine d'inductance (6) et une unité de commande (13) destinée à commander ladite bobine d'inductance (6) sur la base du signal reçu en provenance dudit capteur de température (5), et comprenant au moins un ou plusieurs dispositif(s) (9) destiné(s) à diriger un écoulement de gaz ou de fluide de refroidissement dans un échange thermique superficiel avec une zone chauffée (10) en regard de ladite bobine d'inductance (6) d'un élément à lier (P1), **caractérisée en ce que** ledit écoulement est régulé sur la base d'un signal reçu par le capteur de température (5).

2. Machine à induction selon la revendication 1, **caractérisée en ce qu'**elle comprend un compacteur (14) comportant une partie métallique (15) pouvant se déplacer vers une position de contact avec une pièce à lier et comportant un circuit de refroidissement destiné à refroidir ladite partie métallique (15), ladite partie métallique (15) étant en outre placée à une distance supérieure à 1,5 cm par rapport à ladite bobine d'inductance (6).

3. Machine selon l'une quelconque des revendications précédentes, **caractérisée en ce que** ladite unité de commande (13) peut être programmée pour mettre sous tension ladite bobine d'inductance (6) au moyen d'une énergie suffisante pour dépasser l'une des températures de fusion, de ramollissement ou de cuisson de la matrice polymère sur une surface (10) dudit élément à lier (P1) en regard d'une partie d'extrémité de ladite bobine d'inductance (6), ledit écoulement gazeux étant propre à maintenir ladite surface (10) approximativement à ladite température ou au-dessous de celle-ci.

4. Machine selon la revendication 3, **caractérisée en ce que** ladite unité de commande (13) est programmée pour commander, sur la base du signal provenant dudit capteur (5), au moins une parmi une position verticale et/ou une puissance de ladite bobine d'inductance (6), et une vitesse et/ou une température dudit écoulement de gaz ou de fluide.

5. Machine selon l'une quelconque des revendications précédentes, **caractérisée en ce qu'**elle comprend un système destiné à déplacer ladite bobine d'inductance (6) et ledit dispositif (9), ladite unité de commande (13) commandant le déplacement vers l'avant de ladite bobine d'inductance (6) et commandant ledit écoulement de fluide et/ou ledit dispositif (9) pour obtenir une liaison continue.

6. Machine selon l'une quelconque des revendications précédentes, **caractérisée en ce que** ladite bobine d'inductance (6) et ledit dispositif (9) sont portés par la même tête mobile d'usinage (3).

7. Machine selon l'une quelconque des revendications précédentes, **caractérisée en ce qu'**elle comprend un support (8) destiné audit dispositif (9), conçu pour régler la position dudit dispositif (9) par rapport à ladite bobine d'inductance (6).

8. Machine selon l'une quelconque des revendications précédentes, **caractérisée en ce que** ledit dispositif (9) comprend une buse.

9. Machine selon l'une quelconque des revendications précédentes, **caractérisée en ce qu'**elle comprend un générateur d'écoulement de gaz ou de fluide (7) commandé par ladite unité de commande (13).

10. Machine selon l'une quelconque des revendications précédentes, **caractérisée en ce que** le dispositif (9) est conçu de manière à produire un écoulement laminaire ou transitoire de gaz ou de fluide de refroidissement sur la zone chauffée (10).

11. Procédé de liaison de composants en matériau composite électroconducteur à matrice polymère, **caractérisé en ce qu'**il est mis en oeuvre au moyen d'une machine à induction selon l'une quelconque des revendications précédentes.

12. Procédé de liaison selon la revendication 11, **caractérisé en ce que** ledit écoulement de refroidissement est appliqué sur une face (10) dudit élément à lier (10) en regard de ladite bobine d'inductance (6), et **en ce que** la température est régulée par conduction et/ou convention d'un élément supplémentaire à lier (P2), qui est au contact dudit élément à lier (P1).

13. Procédé de liaison selon l'une des revendications 11 et 12, **caractérisé en ce qu'**il comprend l'étape consistant à produire à partir du dispositif (9) un écoulement laminaire ou transitoire de sortie de gaz ou de fluide de refroidissement sur la zone chauffée (10).
